# EUROPEAN PATENT APPLICATION

(11) **EP 1 650 627 A2**
(43) Date of publication of application: **26.04.2006**
(21) Application number: 05023327.9
(22) Date of filing: 25.10.2005
(51) Int. Cl.: G06F 1/00

(54) **MP3 player capable of automatic updating, automatic updating system for MP3 player and method thereof**

(30) Priority: 25.10.2004 KR 2004085286
(71) Applicant: Reigncom Ltd., Gangnam-gu 135-739 Seoul (KR)
(72) Inventor: Hwang, Eul Jin, Secho-gu 137- 719 Seoul (KR)
(74) Representative: Winter, Brandl, Fürniss, Hübner Röss, Kaiser, Polte Partnerschaft Patent- und Rechtsanwaltskanzlei

(57) **Abstract**

Disclosed herein are a system and method for detecting a stored music list stored in a Moving Picture Experts Group-1 Audio Layer-3 (MP3) player and selectively downloading only updated current music files to the MP3 player, via the Internet, and a MP3 player capable of being automatically updated by the system and method. The system includes an MP3 server for updating and storing a plurality of music files and a music group list and providing the music files over the Intemet; an MP3 player for storing music files and creating a stored music list, the MP3 player including an authentication information storage unit for storing user authentication information used to access the MP3 server; and an Internet terminal for sending and receiving data to and from the MP3 player and accessing the MP3 server via the Intemet; wherein the Internet terminal accesses the MP3 server and automatically sends the user authentication information to the MP3 server as the MP3 player gains access; and wherein the stored music list and the music group list are compared with each other, and only one or more music files existing only in the music group list are sent from the MP3 server to the MP3 player.

## Description

### Related Applications

The present disclosure relates to subject matter contained in priority Korean Application No. 10-2004-0085286, filed on 25 October 2004, which is herein expressly incorporated by reference in its entirety.

### BACKGROUND OF THE INVENTION

### 1. Field of the Invention

The present invention relates to a system and method for detecting a stored music list stored in a Moving Picture Experts Group-1 Audio Layer-3 player and selectively downloading only updated current music files to the Moving Picture Experts Group-1 Audio Layer-3 player, via the Internet, and a Moving Picture Experts Group-1 Audio Layer-3 player capable of being automatically updated by the system and method.

### 2. Description of the Related Art

With the recent development of semiconductor technology, portable Moving Picture Experts Group-1 Audio Layer-3 (MP3) players, which store music in memory in computer file form and play the stored music, are being popularized. MP3 players can store music in the MP3 players themselves without the need to carry separate storage media, such as cassette tapes or music Compact Discs (CDs), unlike existing portable music players such as cassette players and CD players, so that they are advantageous in that they are easy to carry, and the durability thereof is excellent and the power consumption thereof is low because they have no mechanically operated parts.

However, the MP3 players are disadvantageous in that, in order to store music in computer file form in the MP3 players, users must use an inconvenient method of searching for MP3 files on the Internet, or an inconvenient method of converting music, which is stored in CDs, into MP3 files using computers and downloading the MP3 files to the MP3 players.

In particular, there is a problem in that users who are highly interested in new music or popular music must not only search for or purchase music and download the music, but also delete previously stored music files from MP3 players to make storage space for music to be downloaded.

### SUMMARY OF THE INVENTION

Accordingly, the present invention has been made keeping in mind the above problems occurring in the prior art, and an object of the present invention is to provide a system and method for automatically updating an MP3 player that when the MP3 player accesses an MP3 server via the Internet terminal can compare the updated music list of the MP3 server with the stored music list of the MP3 player and selectively send only updated music files to the MP3 player.

Additionally, another object of the present invention is to provide an MP3 player that can automatically update music files through the transmission and reception of data to and from an MP3 server over the Internet.

An object of an embodiment of the present invention is to provide a system and method for automatically updating an MP3 player that, when an Internet terminal detects access by the MP3 player, can automatically access an MP3 server without separate manipulation, such as a user's HTTP address input, and can send updated music files.

An object of another embodiment of the present invention is to provide a system and method for automatically updating an MP3 player in which an MP3 server automatically authenticates a user without separate manipulation, such as a user's Id and password input, in such a way that the user's authentication information is previously stored in an MP3 player and the MP3 player automatically sends the authentication information upon access to an MP3 server.

An object of still another embodiment of the present invention is to provide a system and method for automatically updating an MP3 player in which an MP3 server can update music lists for various genres and selectively and automatically initiate the download of music files of a genre corresponding to a user's selection.

An object of still another embodiment of the present invention is to provide a system and method for automatically updating an MP3 player in which the MP3 player can rearrange the order of storage of stored music files according to a plurality of a user's preferences, such as the ranking of popularity.

An object of still another embodiment of the present invention is to provide a system and method for automatically updating an MP3 player that can automatically delete music files that pertain to music files stored in the MP3 player and are not included in the updated music list of an MP3 server, thus ensuring storage space for update.

In order to accomplish the above object, the present invention provides a system for automatically updating an MP3 player, including an MP3 server for updating and storing a plurality of music files and a music group list and providing the music files over the Internet; an MP3 player for storing music files and creating a stored music list, the MP3 player including an authentication information storage unit for storing user authentication information used to access the MP3 server: and an Internet terminal for sending and receiving data to and from the MP3 player and accessing the MP3 server via the Internet; wherein the Internet terminal accesses the MP3 server and automatically sends the user authentication information to the MP3 server as the MP3 player gains access; and wherein the stored music list and the music group list are compared with each other, and only one or more music files existing only in the music group list are sent from the MP3 server to the MP3 player.

Additionally, the present invention provides a method of automatically updating an MP3 player, including a first step at which an MP3 player storing user authentication information accesses an Internet terminal; a second step at which the Internet terminal accesses an MP3 server; a third step at which the MP3 server automatically authenticates a user using the user authentication information previously stored in the MP3 player; and a fourth step at which the MP3 server compares a music group list with a stored music list stored in the MP3 player and sends music files existing only in the music group list to the MP3 player.

Additionally, the present invention provides an MP3 player, including a music file storage unit for storing music files; a stored music list creation unit for creating a stored music list, that is, a list of music files stored in the music file storage unit; an Internet terminal connection unit for accessing an Internet terminal capable of sending and receiving data to and from an MP3 server that stores a plurality of music files and creates and updates a music group list for the music files, via the Internet; an authentication information storage unit for storing user authentication information that is used to access the MP3 server; and an update unit for receiving music files existing only in the music group list from the MP3 server as a result of comparison of the stored music list with the music group list and updating the music files stored in the music file storage unit, when accessing the MP3 server via the Internet terminal connection unit.

### BRIEF DESCRIPTION OF THE DRAWINGS

The above and other objects, features and advantages of the present invention will be more clearly understood from the following detailed description taken in conjunction with the accompanying drawings, in which:
FIG. 1 is a diagram illustrating the construction of a system for automatically updating an MP3 player in accordance with an embodiment of the present invention;
FIG. 2 is a diagram illustrating the construction of an MP3 player in accordance with an embodiment of the present invention;
FIG. 3 is a diagram illustrating the construction of an MP3 server in accordance with an embodiment of the present invention;

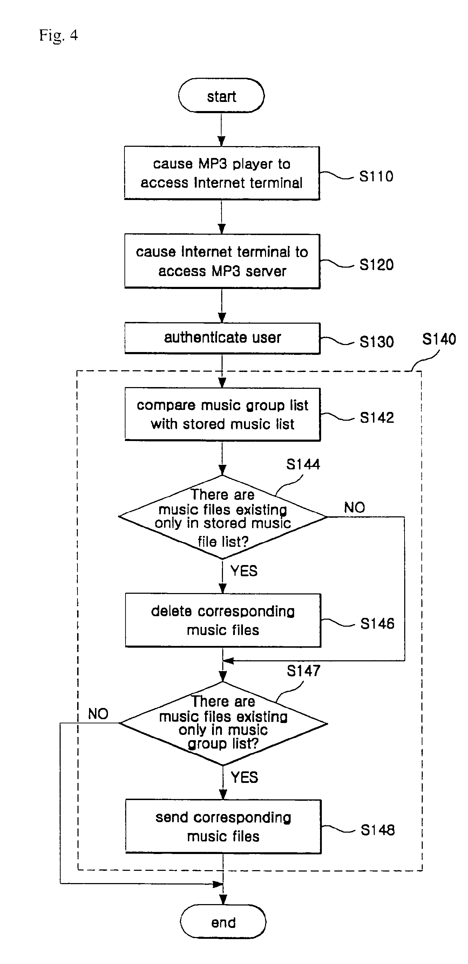

FIG. 4 is a flowchart illustrating a method of automatically updating an MP3 player in accordance with an embodiment of the present invention;
FIG. 5 is a signal processing diagram illustrating a method of automatically updating an MP3 player in accordance with a first embodiment of the present invention; and
FIG. 6 is a signal processing diagram illustrating a method of automatically updating an MP3 player in accordance with a second embodiment of the present invention.

### DESCRIPTION OF THE PREFERRED EMBODIMENTS

Reference should now be made to the drawings, in which the same reference numerals are used throughout the different drawings to designate the same or similar components.

Embodiments of the present invention are described in detail below with reference to the accompanying drawings.

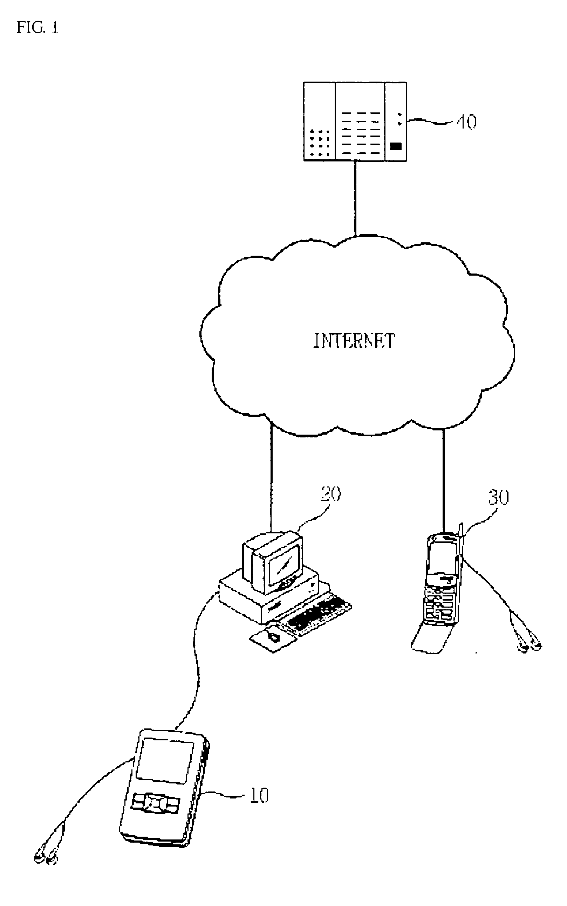

FIG. 1 illustrates an MP3 player automatic update system according to the present invention. The MP3 player automatic update system according to the present invention includes an MP3 player 10 for storing music files and creating a stored music list, an MP3 server 40 for updating and storing a plurality of music files and a music group list and providing music files via the Internet, and an Internet terminal 20 for transmitting and receiving data to and from the MP3 player 10 and accessing the MP3 server 40 via the Internet.

The MP3 player 10 includes a function of downloading music files, such as MP3 files, through communication with an external device, such as a computer, like a typical MP3 player and a function of creating a stored music list and transmitting the list via a connection unit 16, such as a USB connector. The MP3 player 10 of the present invention is not limited to those having such a name, but refers to all devices that include a function of storing data-type music files, such as WAV files, AU files, OGG files and MID files, other than MP3 files, and converting the music files into audio signals.

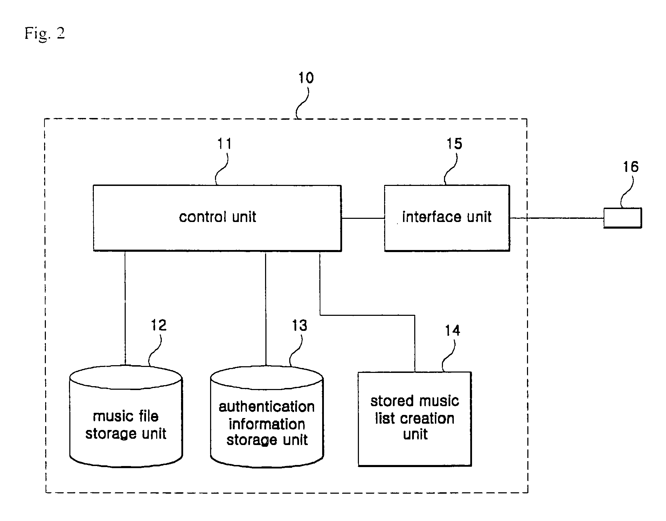

With reference to FIG. 2, the construction of the MP3 player 10 is described in detail below. FIG. 2 illustrates only elements that are directly related to the construction of the present invention. Since the construction for playing music and the construction for providing a user interface are the same as in the conventional MP3 player, detailed descriptions thereof are omitted here. A control unit 11 functions to control the overall operation of the MP3 player 10, and the music file storage unit 12 functions to store music files downloaded by a user, like flash Random Access Memory (RAM). A stored music list creation unit 14 functions to create a list of music files stored in the MP3 player 10 and a stored music list in coded data form that can distinguish one piece of music from another. An interface unit 15 and the connection unit 16 function to transmit and receive data to and from the Internet terminal 20, and include wireless interfaces, such as Bluetooth, as well as wired interfaces, such as a Universal Serial Bus (USB) connector.

Meanwhile, it is preferred that the MP3 player 10 further includes an authentication information storage unit 13 and stores authentication information that the user uses to access the MP3 server 40. A detailed description of the authentication information storage unit 13 will be given in conjunction with a description of the operational relationship between elements below.

The Internet terminal 20 refers to a device that can access the Internet via a communication network. Although, in the embodiment of the present invention, the Internet terminal 20 is exemplified by a Personal Computer (PC), it is not limited to the PC, but includes a Personal Digital Assistant (PDA), a mobile phone, a kiosk, etc. Meanwhile, with the recent development of information technology, a mobile phone 30 including an MP3 player function is used, in which case the function of the MP3 player 10 and the function of the Internet terminal 20 are combined together from a functional point of view. The mobile terminal 30 corresponds to both the MP3 player 10 and the Internet terminal 20.

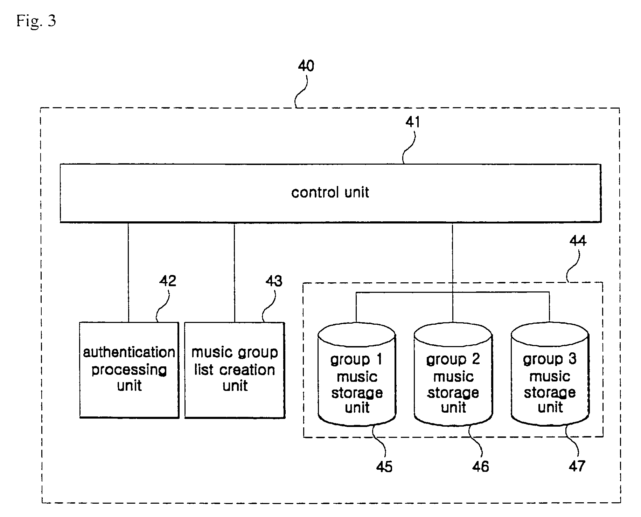

The MP3 server 40 is the same as a general Internet server, and provides the service of storing a plurality of music files and transmitting corresponding music files via the Internet at the request of users. Although the term MP3 server 40 is used for ease of description, the MP3 server 40 is not limited to those thus named, but refers to servers that can transmit any types of data music files, such as WAV files, AU files, OGG files and MID files, as well as MP3 files. With reference to FIG. 3, the construction of the MP3 server 40 is described in more detail below. FIG. 3 illustrates only elements that are directly related to the present invention. Since the construction for communication network access is the same as that of a conventional Internet server, a detailed description thereof is omitted. The control unit 41 controls the overall operation of the MP3 server 40, and an authentication processing unit 42 functions to authenticate the user or MP3 player 10 that accesses the MP3 server 40. The music file storage unit 44 stores music files provided by the server, and a music group list creation unit 43 prepares and stores lists for respective music groups. The music file storage unit 44 may be comprised of a plurality of music storage units, for example group, music storage unit 45, group 2 music storage unit 46 and group 3 music storage unit 47. In the meantime, music files stored in the music file storage unit 44 are regularly or irregularly updated to new music by the administrator of the MP3 server 40, and the music group list creation unit 43 updates the music group lists for respective groups accordingly.

The operational relationship between respective elements is as follows. First, the Internet terminal 20 accesses the MP3 server 40 when the MP3 player 10 gains access.

It is preferred that, for the user's convenience, the Internet terminal 20 automatically access the MP3 server upon detecting access by the MP3 player without an input procedure of inputting the Uniform Resource Locator (URL) of the MP3 server 40 using the Internet terminal 20, unlike a method by which the user accesses a general Internet server. For example, when the user's computer detects access by the MP3 player 10 via the USB connector, the computer may automatically access the URL of the MP3 server 40 using a previously installed program without the user additionally inputting a URL.

More preferably, as shown in FIG. 2, the MP3 player 10 may further include an authentication information storage unit 13 for storing user authentication information that is used to access the MP3 server 40. In this case, the Internet terminal 20 not only automatically accesses the MP3 server 40 when the MP3 player 10 gains access, but also automatically receives user authentication information from the MP3 player 10 and transmits the user authentication information to the MP3 server 40. Accordingly, the user can obtain authentication from the MP3 server 40 at the time of general Internet server access without an inconvenient procedure, such as the input of a user ID or password.

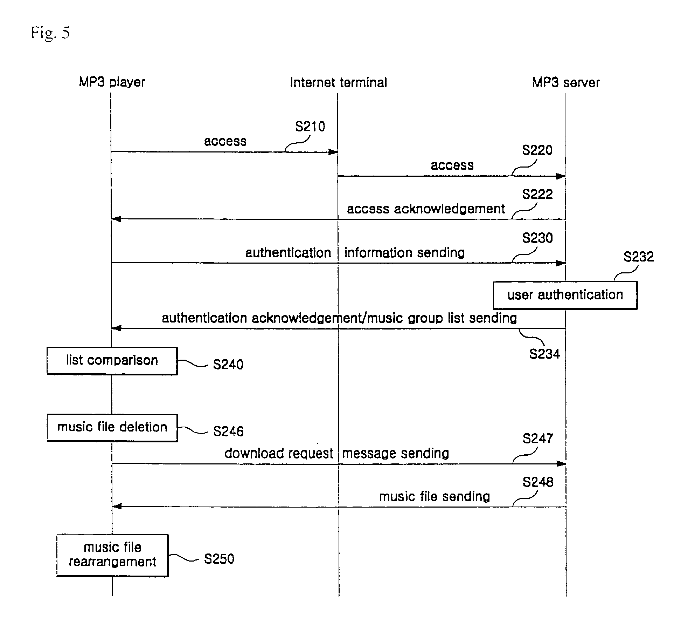

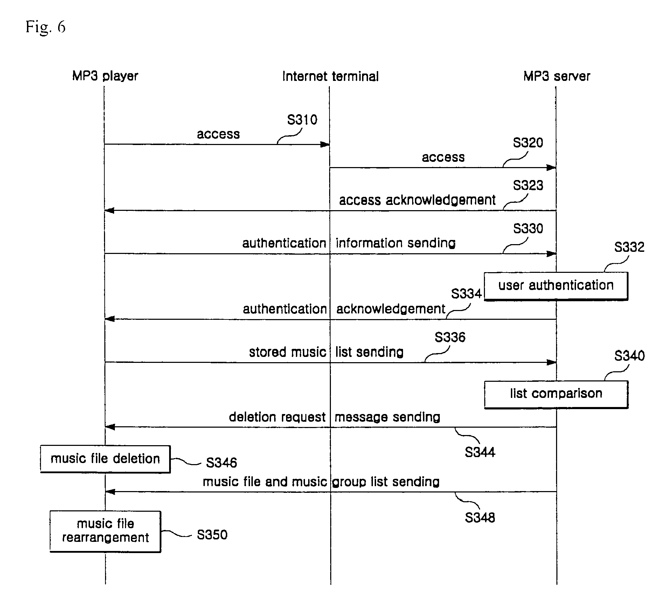

When the MP3 player 10 accesses the MP3 server 40, the MP3 server 40 compares the stored music list created by the stored music list creation unit 14 of the MP3 player 10 with the music group list created by the music group list creation unit 43 of the MP3 server 40, and selectively transmits only updated music files, which exist only in the music group list to the MP3 player 30. At this time, preferably, to ensure storage space in the MP3 player 10 where updated music files will be stored, music files existing only in the stored music list may be deleted. Meanwhile, the flow of a transmitted signal varies depending on whether the operation of comparing lists is processed by the MP3 player 10 or MP3 server 40. Descriptions of this difference will be given in descriptions of FIGS. 5 and 6.

More preferably, the MP3 player 10 may rearrange the stored music files according to the order of the music group list after receiving the music files. For example, when the music group list provided by the MP3 server 40 is arranged in order of popularity, like a Billboard chart, the popularity ranking of the music included in the list varies with time, and the MP3 player 10 automatically rearranges the stored music in order of popularity whenever it accesses the MP3 server 40. As a result, the present invention provides the advantage of enabling the orders of storage and playing of music files stored in the MP3 player 10 to be synchronized with the order of recent popularity without the user performing separate rearrangement work.

The MP3 server 40 may provide only a single music group list. However, it is preferred that a plurality of music group lists be stored and updated, a music group list selected by the user be stored as the user's information, and only the selected music group list be compared with the stored music list of the MP3 player of the user when the corresponding user gains access. In this case the user may previously designate a preferred list from among a plurality of music group lists, for example, lists classified according to genre, such as Rock, Jazz, and Ballads, or depending on age, and stores the preferred list as part of the user information, so that only music suitable for the user's preferences will be provided thereafter.

Furthermore, besides a music group list created by the music group list creation unit 43 of the MP3 server 40 itself, a music group list, which was registered by a certain user and the announcement of which was requested thereafter, may be included in the music group lists provided by the MP3 server 40. That is, certain users using the MP3 server 40 of the present invention may register personal music group lists formed by collecting preferred pieces of music with the MP3 server 40 and request the announcement of the lists to other persons. Thereafter, some other user previously designate a preferred personal music group list from among the announced personal music group lists and store the preferred personal music group list as part of the user information, so that only the pieces of music pertaining to the designated personal music group list can be updated.

When the stored music list and the music group list are compared with each other, it is preferred that only legally distributed MP3 files be targeted for the comparison. The reason for this is that illegally reproduced MP3 files or MP3 files downloaded from illegal servers may disrupt order in the circulation of MP3 files and consistent comparison criteria cannot be applied because the same pieces of music may have different file names or Identifications (IDs) depending on the situations of reproduction. In other words, since it is difficult for the MP3 server 40 to apply consistent comparison criteria to all the illegally reproduced MP3 files, it is impossible to determine where MP3 files targeted for update have been previously stored in the MP3 player 10.

More preferably, in the comparison of the stored music list with the music group list, Digital Rights Management (DRM)-enabled MP3 files can be targeted for the comparison, in which case copyright information stored in the MP3 files, unique serial numbers, or IDs assigned at the time of creating the MP3 files may be a comparison basis. DRM is a management technique of inserting various types of copyright information into digital content so as to prevent the illegal distribution and reproduction of digital content and provide proper profits to copyright holders. DRM-enabled digital content must undergo a copyright authentication process at the time of use even after it has been reproduced. Accordingly, the basis and criterion of the comparison of music files can be clarified and become consistent when one or more of various types of unique information contained in DRM-enabled MP3 files are used for the comparison.

FIG. 3 illustrates a method of automatically updating an MP3 player in accordance with an embodiment of the present invention. First, a first step S110 at which the MP3 player 10 accesses the Internet terminal 20 is performed. This access can be achieved in a wired or wireless manner. A device in which the function of the MP3 player 10 and the function of the Internet terminal 20 are combined together does not undergo a separate access step.

Next, a second step S120 at which the Internet terminal 20 accesses the MP3 server 40 via a communication network, such as the Internet, is performed. At this step, it is preferred that the Internet terminal 20 automatically accesses the MP3 server 40 upon detecting access by the MP3 player 10.

Thereafter, a third step S 130 at which the MP3 server 30 authenticates the user is performed. At this authentication step, it is preferable to authenticate the user by automatically sending authentication information, which was previously stored in the MP3 player 10, to the MP3 server 40 via the Internet terminal 20.

Finally, a fourth step S140 of comparing the music group list updated in the MP3 server 40 with the stored music list stored in the MP3 player 10 (steps S144 and S146) and selectively sending only music files existing only in the music group list from the MP3 server 40 to the MP3 player 10 (step S148) is performed. At this time, it is preferred that music files that are determined to exist only in the stored music list be selectively deleted from the music file storage unit 12 of the MP3 player 10 (step S146), thus ensuring storage space where music files to be updated will be stored.

Furthermore, when the update of music files is completed, it is preferred that the order of storage of the music files stored in the MP3 player 10 be rearranged according to the order of the music group list.

FIG. 5 is a signal processing diagram in which the MP3 player 10 compares the music group list with the stored music list in accordance with a first embodiment of the present invention. When the MP3 player 10 accesses the Internet terminal 20 at step S210 and the Internet terminal 20 accesses the MP3 server 40 at step S220, the MP3 server 40 sends an access acknowledgement message to the MP3 player 10 at step S222.

The MP3 player 10 sends previously stored authentication information to the MP3 server 40 in response to the access acknowledgement message at step S230, and the MP3 server 40 authenticates the user by determining whether the authentication information matches the user information stored in the MP3 server 40 at step S232.

If the user authentication is successful, the MP3 server 40 sends the music group list to the MP3 player 10, along with the authentication acknowledgement message, at step S234, and the MP3 player 10 compares the music group list with the stored music list of the MP3 player 10 at step S240. The MP3 player 10 deletes music files that are determined to exist only in the stored music list at step S246, and creates a download request message only for the music files existing in the music group list and sends the download request message to the MP3 server 40 at step S247.

The MP3 server 40 sends only music files requested by the download request message to the MP3 player 10 at step S248, and the MP3 player 10 rearranges the order of the storage of the stored music files according to the order of the music group list after the completion of the transmission at step S250.

FIG. 6 is a signal processing diagram in which the MP3 server 40 compares the music group list with the stored music list in accordance with a second embodiment of the present invention. When the MP3 player 10 accesses the Internet terminal 20 at step S310 and the Internet terminal 20 accesses the MP3 server 40 at step S320, the MP3 server 40 sends an access acknowledgement message to the MP3 player 10 at step S322.

The MP3 player 10 sends previously stored authentication information to the MP3 server 40 in response to the access acknowledgement at step S330, and the MP3 server 40 authenticates the user by determining whether the authentication information matches the user information stored in the MP3 server 40 at step S332.

If the user authentication is successful, the MP3 server 40 sends an authentication acknowledgement message at step S334, and the MP3 player 10 sends the stored music list to the MP3 server 40 in response to the authentication acknowledgement message at step S336. The MP3 server 40 compares the received music group list with the stored music list of the MP3 player 10 at step S340. The MP3 server 40 creates a deletion request message for music files existing only in the stored music list and sends the deletion request message to the MP3 player 10 at step S344, and the MP3 player 10 deletes corresponding music files in response to the deletion request message at step S346. The MP3 server 40 selectively sends only music files existing in the music group list to the MP3 player 10 at step S348. When the transmission is completed, the MP3 server 40 sends the music group list to the MP3 player 10, and the MP3 player 10 rearranges the order of the storage of the stored music files according to the received music group list at step S350.

As described above, the MP3 player, and the system and method for automatically updating the MP3 player are advantageous in that they can update the music files of the MP3 player to new music using the server without the inconvenient work of the user's searching for or producing desired music files using a computer and then downloading the music files to the MP3 player. The preferred embodiment of the present invention is advantageous in that, only if the user connects the MP3 player to the Internet terminal, such as a PC, all of the MP3 server access process, the user authentication process, the new music search process and the new music update process are automatically performed. Another embodiment of the present invention is advantageous in that the user's preferences for music can be stored as part of the user information and the update only of the user's preferred music can be achieved. Finally, still another embodiment of the present invention is advantageous in that the order of storage or playing of music files stored in the user's MP3 player can be synchronized with the ranking of current popularity of music.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A system for automatically updating a Moving Picture Experts Group-1 Audio Layer-3 (MP3) player, comprising:
an MP3 server for updating and storing a plurality of music files and a music group list and providing the music files over the Internet;
an MP3 player for storing music files and creating a stored music list, the MP3 player comprising an authentication information storage unit for storing user authentication information used to access the MP3 server; and
an Internet terminal for sending and receiving data to and from the MP3 player and accessing the MP3 server via the Internet;
wherein the Internet terminal accesses the MP3 server and automatically sends the user authentication information to the MP3 server as the MP3 player gains access;
wherein the stored music list and the music group list are compared with each other, and only one or more music files existing only in the music group list are sent from the MP3 server to the MP3 player; and
wherein the music files are Digital Rights Management (DRM)-enabled MP3 music files, and the comparison is performed based on unique serial numbers assigned to the music files for DRM support or IDentication (ID) information.

2. The system as set forth in claim 1, wherein:
the MP3 player receives the music group list from the MP3 server, compares the music group list with the stored music list creates a download request message for music files existing only in the music group list, and sends the download request message to the MP3 server: and
the MP3 server sends the music files in response to the download request message.

3. The system as set forth in claim 1, wherein the MP3 server receives the stored music list from the MP3 player, compares the stored music list with the music group list, and sends music files existing only in the music group list to the MP3 player.

4. The system as set forth in any one of claims 1 to 3, wherein the Internet terminal automatically accesses the MP3 server using a computer program upon detecting the access by the MP3 player.

5. The system as set forth in any one of claims 1 to 3, wherein the MP3 server regularly and/or irregularly updates and stores the music group list, stores the music group list, which was previously selected by the user, as part of user information, and compares the selected music group list with the stored music list when the user gains access.

6. The system as set forth in any one of claims 1 to 3, wherein the MP3 player rearranges an order of storage of the music files, which were received and stored, according to that of the music group list.

7. The system as set forth in claim 2, wherein the MP3 automatically deletes music files existing only in the stored music list as a result of the comparison of the stored music list with the music group list.

8. The system as set forth in claim 3, wherein:
the MP3 server creates a deletion request message for music files existing only in the stored music list as a result of the comparison of the stored music list with the music group list and sends the deletion request message to the MP3 player; and
the MP3 player automatically deletes the corresponding music files in response to the deletion request message.

9. A method of automatically updating an MP3 player, comprising:
a first step at which an MP3 player storing user authentication information accesses an Internet terminal;
a second step at which the Internet terminal accesses an MP3 server;
a third step at which the MP3 server automatically authenticates a user using the user authentication information previously stored in the MP3 player; and
a fourth step at which the MP3 server compares a music group list with a stored music list stored in the MP3 player and sends music files existing only in the music group list to the MP3 player: and
wherein the music files are DRM-enabled MP3 files, and the comparison is performed based on unique serial numbers assigned to the music files for DRM support or ID information.

10. The method as set forth in claim 9, wherein the fourth step comprises:
a step at which the MP3 server send the music group list to the MP3 player;
a step at which the MP3 player compares the music group list with the stored music list, creates a download request message for music files existing only in the music group list, and sends the download request message to the MP3 server; and
a step at which the MP3 server sends the music files to the MP3 player in response to the download request message.

11. The method as set forth in claim 9. wherein the fourth step comprises:
a step at which the MP3 player sends the stored music list to the MP3 server: and
a step at which the MP3 server compares the music group list with the stored music list and sends music files existing only in the music group list to the MP3 player.

12. The method as set forth in any one of claims 9 to 11, wherein the access by the Internet terminal to the MP3 server at the second step is automatically performed using a computer program when the Internet terminal detects the access by the MP3 player.

13. The method as set forth in any one of claims 9 to 11, wherein the MP3 server regularly and/or irregularly updates and stores the music group list, stores a music group list, which was previously selected by a user, as part of user information, and compares the selected music group list with the stored music list when the user gains access.

14. The method as set forth in any one of claims 9 to 11, further comprising the step at which the MP3 player rearranges an order of storage of the stored music files according to that of the music group list after the transmission of the music files at the fourth step.

15. The method as set forth in claim 10, wherein the fourth step further comprises a step at which the MP3 player compares the music group list with the stored music list, and deletes music files existing only in the stored music list.

16. The method as set forth in claim 11, wherein the fourth step further comprises:
a step at which the MP3 server compares the music group list with the stored music list, creates a deletion request message for music files existing only in the stored music list and sends the deletion request message to the MP3 player: and
a step at which the MP3 player deletes the music files in response to the deletion request message.

17. An MP3 player, comprising:
a music file storage unit for storing music files;
a stored music list creation unit for creating a stored music list, that is, a list of music files stored in the music file storage unit;
an Internet terminal connection unit for accessing an Internet terminal capable of sending and receiving data to and from an MP3 server that stores a plurality of music files and creates and updates a music group list for the music files, via an Internet;
an authentication information storage unit for storing user authentication information that is used to access the MP3 server; and
an update unit for receiving music files existing only in the music group list from the MP3 server as a result of comparison of the stored music list with the music group list and updating the music files stored in the music file storage unit when accessing the MP3 server via the Internet terminal connection unit;
wherein the Internet terminal automatically sends the user authentication information to the MP3 server as the MP3 player gains access, the music files are DRM-enabled MP3 files, and the comparison is performed based on unique serial numbers assigned to the music files for DRM support or ID information.

18. The MP3 player as set forth in claim 17, wherein the update unit comprises:
a music file comparison unit for detecting music files existing only in the music group list by comparing the stored music list with the music group list; and
a download request message creation unit for requesting music files existing only in the music group list from the MP3 server.

19. The MP3 player as set forth in claim 17, wherein the update unit automatically receives the music files existing only in the music group list from the MP3 server as a result of the comparison by the MP3 server, when accessing the MP3 server via the Internet terminal connection unit over the Internet.

20. The MP3 player as set forth in any one of claims 17 to 19, wherein the Internet terminal connection unit automatically accesses the MP3 server using a computer program upon detecting the access to the Internet terminal.

21. The MP3 player as set forth in any one of claims 17 to 19, wherein the MP3 server regularly and/or irregularly updates and stores the music group list, stores a music group list previously selected by the user as part of user information, and compares the selected music group list with the stored music list.

22. The MP3 player as set forth in any one of claims 17 to 19, wherein the music file storage unit rearranges an order of the music files according to that of an updated music group list when the music group list is updated by the music group list creation unit after the former update.

23. The MP3 player as set forth in claim 18, wherein the update unit further comprises an automatic music file deletion unit for comparing the stored music list with the music group list and automatically deleting music files existing only in the stored music list.

24. The MP3 player as set forth in claim 19, wherein the update unit further comprises an automatic music file deletion unit for receiving a deletion request message for the music files existing only in the stored music list from the MP3 server when automatically receiving the music files existing only in the music group list from the MP3 server, and deleting corresponding music files in response to the deletion request message.
